Europäisches Patentamt

European Patent Office

Office européen des brevets

(11) Veröffentlichungsnummer: **0 175 256**
**B1**

(12) **EUROPÄISCHE PATENTSCHRIFT**

(45) Veröffentlichungstag der Patentschrift: **04.04.90**

(21) Anmeldenummer: **85111374.6**

(22) Anmeldetag: **09.09.85**

(51) Int. Cl.⁵: **G 01 F 11/26**

(54) **Rohrförmiger Zweikammerflüssigkeitsdosierer.**

(30) Priorität: **17.09.84 DE 3434052**

(43) Veröffentlichungstag der Anmeldung:
**26.03.86 Patentblatt 86/13**

(45) Bekanntmachung des Hinweises auf die
Patenterteilung:
**04.04.90 Patentblatt 90/14**

(84) Benannte Vertragsstaaten:
**AT BE CH DE FR GB IT LI NL**

(56) Entgegenhaltungen:
**FR-A-1 026 309**
**FR-A-1 070 404**
**FR-A-1 071 053**
**FR-A-2 360 872**
**US-A-1 877 808**
**US-A-1 916 819**
**US-A-2 021 004**
**US-A-2 804 103**
**US-A-3 023 937**
**US-A-3 841 534**

(73) Patentinhaber: **Henkel Kommanditgesellschaft
auf Aktien
Postfach 1100 Henkelstrasse 67
D-4000 Düsseldorf-Holthausen (DE)**

(72) Erfinder: **Wienand, Friedrich
Heinenkamp 28
D-4005 Meerbusch 2 (DE)**
Erfinder: **Bertram, Horst
Schimmelpfennigstrasse 28
D-4000 Düsseldorf 13 (DE)**
Erfinder: **Bongers, Bernhard
Boschstrasse 57
D-4000 Düsseldorf 13 (DE)**

Courier Press, Leamington Spa, England.

**Beschreibung**

Die Erfindung richtet sich auf einen rohrförmigen Zweikammerdosierer zum dichten Einsetzen in eine Behälteröffnung mit einer geschlossenen Bodenfläche und einer mit einer Durchführung für einen gegebenenfalls darin in Richtung einer Längsachse verschiebbaren Ausgießkanal versehenen, geschlossenen Deckelfläche, welcher Dosierer im Bereich seiner Deckelfläche einen durch Kippen des Behälters über einen an die Deckelfläche angrenzenden Ringspalt aus dem Behälterinneren zu füllenden Dosierraum und im Bereich seiner Bodenfläche einen durch Zurückkippen des Behälters aus dem Dosierraum zu befüllenden Sammelraum aufweist, wobei Sammelraum und Dosierraum unter Beibehaltung eines Verbindungsweges durch einen zum Sammelraum hin aufgespreizten, trichterförmigen Einsatz unterteilt sind, der in den Ausgießkanal übergeht und den Sammelraum mit dem Außenraum verbindet.

Ein derartiger Dosierer ist aus der US—A—3023937 bekannt. Dieser Dosierer ist jedoch auf körnige oder pulverförmige Schüttgüter abgestimmt und daher in dieser Form nicht für die Flüssigdosierung anwendbar. Insbesondere ist mit diesem Dosierer aufgrund der großen Produktdurchtrittsöffnung im Bereich des dortigen Trichters eine präzise und von der Lage des Dosierers unabhängige sowie stets gleichbleibende Dosierung nicht möglich.

Aus der FR—A—1071053 ist ein Dosierer mit einem trichterförmigen Einsatz bekannt, bei welchem des trichterförmige Einsatz konzentrisch, sich mit seinem Rand bis dicht an die Innenwand einer Rohrkammer erstreckend in dem Dosierer angeordnet ist und der trichterförmige Einsatz in seinem Rand eine kerbförmige Öffnung aufweist.

Weiterhin ist aus der FR—A—1070404 ein Zweikammerdosierer mit Dosier- und Sammelraum zum dichten Einsetzen in eine Behälteröffnung bekannt, bei welchem der Dosierraum einen Ringspalt und der Sammelraum eine weitere Öffnung zum Behälterinnenraum aufweist.

Ein Dosierer mit einer Öffnung zum Behälterinneren im Bereich des Dosierraumes sowie einer Durchtrittsöffnung zwischen Dosierraum und Sammelraum und einem Ausgußkanal ist weiterhin aus der FR—A—1026309 bekannt.

Weitere Dosierer, die sowohl einen Sammelraum als auch einen Dosierraum aufweisen, zeigen die US—A—1916819 und die FR—A—2360872.

In der US—A—2804103 ist ein Flaschenverschluß mit einer sternförmigen Stütze beschrieben.

Dosierer mit verschiebbar gelagertem Ausgießkanal zeigen die US—A—3841534, US—A—2021004 und US—A—1877808.

Der Erfindung liegt die Aufgabe zugrunde, für Flüssigprodukte einen aus möglichst wenigen sowie in Massenproduktion wirtschaftlich herzustellenden Bauteilen bestehenden Zweikammerdosierer mit hoher Dosiergenauigkeit zu schaffen, in welchem eine Fließhemmung nicht auftritt und dessen Dosiergeschwindigkeit sowie -genauigkeit in beliebiger Überkopfausgießstellung gewährleistet sind.

Bei einem rohrförmigen Zweikammerdosierer der eingangs bezeichneten Art wird diese Aufgabe gemäß der Erfindung dadurch gelöst, daß der trichterförmige Einsatz konzentrisch, sich mit seinem Rand bis dicht an die Innenwand der Rohrkammer erstreckend im Dosierer angeordnet ist sowie in seinem Rand eine kerbförmige Öffnung aufweist und daß zwischen Ringspalt und der Spitze der Kerbe eine weitere, die maximale Füllhöhe des Dosierraumes bestimmende Öffnung ausgebildet ist.

Bei einem solchen Aufbau besitzt der Dosierraum in seinem wesentlichen Teil einen so großen Querschnitt, daß eine Fließhemmung nicht auftreten kann. Zugleich bildet die Durchgangsöffnung zwischen Dosierraum und Sammelraum einen so engen Übergang zwischen diesen Räumen, daß eine hohe Dosiergenauigkeit sichergestellt wird. In diesem Zusammenhang ist darauf hinzuweisen, daß mehrere Durchgangsöffnungen, vorzugsweise gleich verteilt, an der Peripherie des Einsatzes vorgesehen werden können. Dabei ist es günstig, die jeweilige Durchgangsöffnung in Form einer von der Peripherie zum Zentrum des Einsatzes hin zugespitzten Kerbe auszubilden. Die enge Durchgangsöffnung zwischen Dosierraum und Sammelraum bildet gewissermaßen den Keim für den Beginn des Fließens; an den Kanten der Öffnung, besonders bei zugespitzter Form, zerreißt ein eventuell entstehender Meniskus auch bei relativ stark viskoser Flüssigkeit, so daß ein problemloses Dosieren ermöglicht wird.

Der fest mit dem Einsatz verbundene Ausgießkanal in der Durchführung der Deckelfläche ist in Richtung der Rohrlängsachse vorzugsweise verschiebbar gelagert. Dabei kann das Trichterablaufrohr in einem in der Deckelfläche befestigten rohrförmigen Mündungseinsatz oder, z.B. über radial, sternförmig vorspringende Arme, auf der Innenfläche einer als zylindrische Rohrkammer ausgebildeten Dosiereraußenwand geführt werden. Durch eine solche Maßnahme wird auf einfache Art ein betreffend die Dosiermenge voreinstellbarer Dosierer geschaffen.

Für ein schnelles Füllen des Dosierraums ist es günstig, wenn der Dosierraum einen umlaufenden Ringspalt an der Dosiererperipherie, angrenzend an den Deckel, besitzt. In der Überkopfstellung des Dosierers kann dann die zu dosierende Flüssigkeit von allen Seiten her zugleich von dem auf dem Kopf stehenden Deckel aus im Dosierraum ansteigen, bis sie die Höhe der Lochförmigen Öffnung im Dosierraum erreicht.

Das der erfingungsgemäße Dosierer in Bezug auf seine Längsachse symmetrisch aufgebaut ist, kann er sowohl zum Vordosieren als auch zum Dosieren in beliebiger Richtung gekippt werden. Der Dosierer läßt bei geeigneter Anordnung seines behälterseitigen Eingangs eine vollständige Behälterentleerung zu. Zum Dosieren werden bewegliche Teile, wie Kugeln, nicht benötigt, eine einhandbedienung ist ohne weiteres möglich. Schließlich erfordert der erfindungsgemäße Dosierer keine komplizierten Herstellungsformteile, da er im wesentlichen nur aus einem Zylinder mit Kopf- und Bodendeckel und einem im Zylinder gegebenenfalls verschiebbar zu lagernden Trichter besteht.

Anhand der schematischen Darstellung eines Ausführungsbeispiels werden Einzelheiten der Erfindungs erläutert. Es zeigen:

Fig. 1 einen Dosierer im Längsschnitt; und

Fig. 2 eine Teilansicht des Dosierers nach Fig. 1.

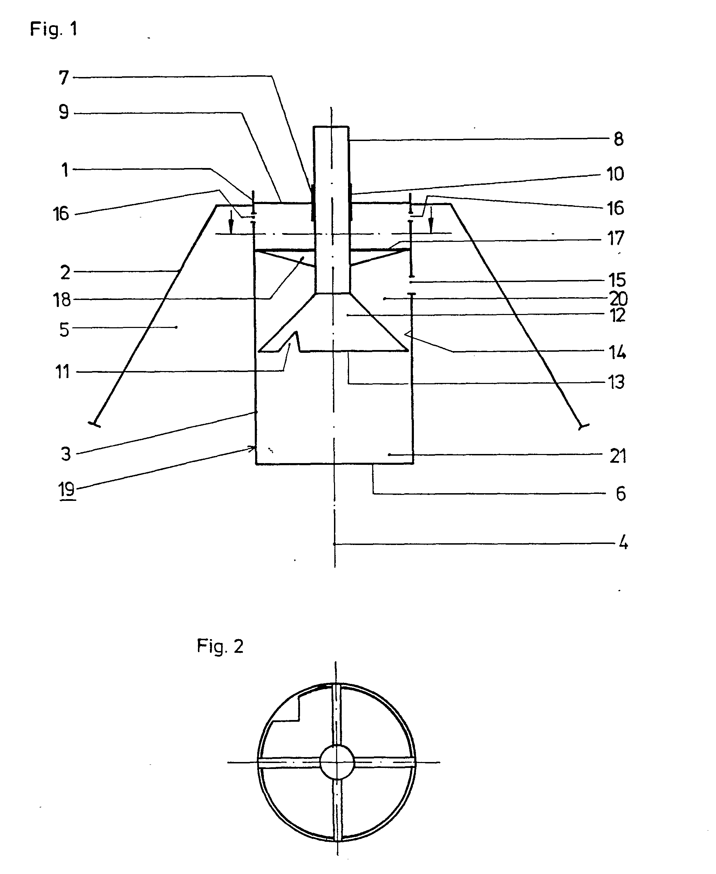

Der Zweikammerdosierer nach Fig. 1 bestehet aus einer in der Behälteröffnung 1 am Kopf eines Behälters 2 abgedichtet einzusetzenden, vorzugsweise zylindrischen Rohrkammer 3, welche symmetrisch in Bezug auf ihre Längsachse 4 ausgebildet sein soll. Die Rohrkammer 3 besitzt an ihrem dem Behälterinnern 5 zugewandten inneren Ende einen geschlossenen Boden 6 und an ihrem dem Boden 6 abgewandten äußeren Ende eine bis auf eine Durchführung 7 für einen Ausgießkanal 8 verschlossene Deckelfläche 9. Die Durchführung 7 kann mit einem eine Führungshilfe in Richtung der Längsachse 4 für den Ausgießkanal 8 bildenden Mündungseinsatz 10 ausgestattet werden. Der Ausgießkanal 8 endet an dem in das Innere der Rohrkammer 3 hineinragenden Ende in einem zum Boden 6 hin trichterförmig aufgespreizten und vorzugsweise kerbförmige Öffnung 11 am Umfang aufweisenden Einsatz 12, dessen Kante bzw. größter Umfang 13 im übrigen dicht an der Innenfläche 14 der Rohrkammer 3 anliegen soll. Der Ausgießkanal 8 bildet demgemäß das Ablaufrohr des als Trichter ausgebildeten Einsatzes 12.

Der behälterseitige Eingang der Rohrkammer 3 besteht aus wenigstens einer seitlichen Einlaßöffnung 15. Diese liegt—bezogen auf den aufrechtstehenden Dosierer—oberhlab der Fläche bzw. Spitze der kerbförmigen Öffnungen 11. Der behälterseitige Eingang der Rohrkammer 3 kann zusätzlich auch als umlaufender Ringspalt 16, vorzugsweise angrenzend an den Deckel 9, ausgebildet werden.

Zum Stabilisieren des Aufbaus kann es dann zweckmäßig sein, den Ausgießkanal 8 mit Hilfe eines radiale Arme gemäß Fig. 2 aufweisenden Sterns 17 oder dergleichen gegen die Innenwand 14 der Rohrkammer 3 abzustützen. An die dem Trichter 12 zugewandte Seite jedes Arms des Sterns 17 kann ein sich in Richtung der Längsachse 4 erstreckender, etwa dreieckiger Steg 18 so angeformt werden, daß eine stabilisierende, stoffschlüssige Verbindung zwischen dem jeweiligen Arm des Sterns 17 und der Außenfläche des Ausgießkanals 8 entsteht. Ein so ausgebildeter Stern 17 ist spritztechnisch leicht herzustellen und stellt—insbesondere in Zusammenwirkung mit dem Steg 18—zugleich ein Mittel zum Erleichtern der Monage des Dosierers dar.

Beim Dosiervorgang wird der Behälter 2 mit dem in die Behälteröffnung 1 eingesetztem, insgesamt mit 19 bezeichnetem Flüssigkeitsdosierer in eine Überkopfstellung gekippt. In einer solchen Schwenkstellung wird der als Vordosierraum benutzte, an die Deckelfläche 9 angrenzende Dosierraum 20 nur bis zur Höhe der Einlaßöffnung 15 mit der zu dosierenden Flüssigkeit aus dem Behälterinnern 5 gefüllt. Der Behälter 2 darf nur höchstens so flexibel sein, daß die Flüssigkeit nicht über die Spitzen der kerbförmigen Durchgangsöffnungen 11 hinweglaufen kann. Vorzugsweise soll das Material von Behälter und Dosierer annähernd die Steife von Glas besitzen.

Beim Zurückschwenken des Behälters 2 in die etwa vertikale Ausgangsposition fließt das Produkt aus dem Dosierraum 20 über die am Umfang 13 des trichterförmigen Einsatzes 12 vorgesehenen Durchgangsöffnungen 11 in einen an den Boden 6 der Rohrkammer 3 angrenzenden, als Hauptdosierraum ausgebildeten Sammelraum 21. Wegen des sich hierbei einstellenden Unterdrucks im Behälter 2 kann die Flüssigkeit im Sammelraum 21 nur bis zur Unterkante bzw. bis zu den Spitzen der Kerben 11 des trichterförmigen Einsatzes 12 ansteigen. Ein weiteres Ansteigen in den Trichter hinein ist nicht möglich, da kein weiterer Druck- und Produktausgleich zwischen den Räumen 20 und 21 stattfinden kann.

Bei erneutem Schwenken des Behälters 2 fließt die in den Sammelraum 21 eindosierte Flüssigkeit über den trichterförmigen Einsatz 12 und den Ausgießkanal 8 aus. Gleichzeitig wird der Dosierraum 20, wegen der Überkopfstellung des Behälters 2—in der oben beschriebenen Weise wieder gefüllt.

Durch Verschieben des Ausgießkanals 8 relativ zur Durchführung 7 bzw. zum Mündungseinsatz 10 in Richtung der Längsachse 4 kann die Relativstellung des Einsatzes 12 bzw. der Spitzen der Kerben 11 in Bezug auf die Bodenfläche 6 verändert und dadurch die beim Dosieren aus dem Ausgießkanal 8 ausfließende Flüssigkeitsmenge kontinuierlich verändert bzw. voreingestellt werden.

Bezugszeichenliste
1 = Behälteröffnung
2 = Behälter
3 = Rohrkammer
4 = Längsachse
5 = Behälterinneres
6 = Boden (3)
7 = Durchführung
8 = Ausgießkanal
9 = Deckelfläche
10 = Mündungseinsatz
11 = kerbförmige Öffnung
12 = trichterförmiger Einsatz
13 = maximaler Umfang (12)
14 = Ringkanal
15 = Öffnung
16 = Öffnung
17 = Sternarme
18 = Stützarme
19 = Dosierer
20 = Vordosierraum
21 = Hauptdosierraum

## Patentansprüche

1. Rohrförmiger Zweikammerdosierer (19) zum dichten Einsetzen in eine Behälteröffnung (1) mit einer geschlossenen Bodenfläche (6) und einer mit einer Durchführung (7) für einen gegebenenfalls darin in Richtung einer Längsachse (4) verschiebbaren Ausgießkanal (8) versehenen, geschlossenen Deckelfläche (9), welcher Dosierer (19) im Bereich seiner Deckelfläche (9) einen durch Kippen des Behälters (2) über einen an die Deckelfläche angrenzenden Ringspalt (16) aus dem Behälterinneren (5) zu füllenden Dosierraum (20) und im Bereich seiner Bodenfläche (6) einen durch Zurückkippen des Behälters (2) aus dem Dosierraum (20) zu befüllenden Sammelraum (21) aufweist, wobei Sammelraum (21) und Dosierraum (20) unter Beibehaltung eines Verbindungsweges durch einen zum Sammelraum hin aufgespreizten, trichterförmigen Einsatz (12) unterteilt sind, der in den Ausgießkanal (8) übergeht und den Sammelraum (21) mit dem Außenraum verbindet, dadurch gekennzeichnet, daß der trichterförmige Einsatz (12) konzentrisch, sich mit seinem Rand (13) bis dicht an die Innenwand (14) der Rohrkammer (3) erstreckend in dem Dosierer (19) angeordnet ist sowie in seinem Rand (13) eine kerbförmige Öffnung (11) aufweist und daß zwischen Ringspalt (16) und der Spitze der Kerbe (11) eine weitere, die maximale Füllhöhe des Dosierraumes bestimmende Öffnung (15) ausgebildet ist.

2. Dosierer nach Anspruch 1, dadurch gekennzeichnet, daß der Ausgießkanal (8) gegen die Innenfläche (14) des Dosierraumes (20), insbesondere mit Hilfe eines radiale Arme besitzenden Sternes (17), abgestützt ist.

## Revendications

1. Doseur tubulaire à deux chambres (19) adapté pour une introduction hermétique dans une ouverture de récipient (1), ce doseur étant pourvu d'un fond (6) fermé et d'une face de couvercle (9) comportant un passage traversant (7) adapté pour recevoir un canal d'écoulement (8) pouvant, le cas échéant, être déplacé en lui dans le sens de son axe longitudinal (4); ce doseur (19) comportant, au niveau de sa face de couvercle (9), une chambre avant (20) pouvant être remplie à partir de l'intérieur du récipient (5) par l'intermédiaire d'une ouverture (16) contiguë à la face du couvercle, en basculant le récipient (2) et, au niveau de son fond (6) une chambre principale (21), pouvant être remplie à partir de la chambre avant (20), en basculant à nouveau le récipient (2), cette chambre principale (21) et la chambre avant (20) étant subdivisées par un élément sous forme d'entonnoir (12), évasé en direction de la chambre principale, débouchant dans le canal d'écoulement (8) et reliant la chambre principale (21) à la chambre extérieure; ce doseur étant caractérisé par le fait que l'élément sous forme d'entonnoir (12), dont le bord (13) touche de manière étanche la paroi intérieure (14) de la chambre tubulaire (3), est disposé dans le doseur (19) de façon concentrique et que son bord (13) est pourvu d'une ouverture sous forme d'une encoche (11), une autre ouverture (15) déterminant le niveau de remplissage maximum de la chambre avant étant prévue située entre une ouverture annulaire (16) et la pointe de l'ouverture sous forme d'encoche (11).

2. Doseur selon la revendication 1, caractérisé par le fait que le canal d'écoulement (8) est soutenu dans la paroi intérieure (14) de la chambre avant (20), notamment à l'aide de bras radiaux (17) disposés en étoile.

## Claims

1. Tubular two-chamber metering device (19) for the tight insertion into a container opening (1) with a closed base surface (6) and a closed lid surface (9) provided with a passage (7) for a pouring channel (8), which is in a given case displaceable therein in direction of a longitudinal axis (4), which metering device (19) displays a metering space (20), which through tilting of the container (2) is to be filled from the interior (5) of the container (2) by way of an annular gap (16) adjoining the lid surface, in the region of its lid surface (9) and a collecting space (21), which through tilting-back of the container (2) is to be filled out of the metering space (20), in the region of its base surface (6), wherein the collecting space (21) and the metering space (20) are—subject to maintenance of a connecting path—subdivided by a funnel-shaped insert (12), which is spread out towards the collecting space (21), passes over into the pouring channel (8) and which connects the collecting space (21) with the exterior space, characterised thereby, that the funnel-shaped insert (12) is arranged concentrically in the metering device (19) with its rim (13) extending closely to the inward wall (14) of the tubular chamber (3) as well as displays a notch-shaped opening (11) in its rim (13) and that a further opening (15), which determines the maximum filling height of the metering space (20), is formed between the annular gap (16) and the point of the notch (11).

2. Metering device according to claim 1, characterised thereby, that the pouring channel (8) is supported against the inward surface (14) of the metering space (20), in particular with the aid of a star (17) possessing radial arms.

Fig. 1

Fig. 2